(19) **Europäisches Patentamt / European Patent Office / Office européen des brevets**

(11) **EP 4 011 605 B1**

(12) **EUROPEAN PATENT SPECIFICATION**

(45) Date of publication and mention
of the grant of the patent:
**28.06.2023   Bulletin 2023/26**

(21) Application number: **21779921.2**

(22) Date of filing: **29.03.2021**

(51) International Patent Classification (IPC):
***B29D 30/06*** (2006.01)

(52) Cooperative Patent Classification (CPC):
**B29D 30/0685;** B29D 2030/0697

(86) International application number:
**PCT/CN2021/083702**

(87) International publication number:
**WO 2021/197281 (07.10.2021 Gazette 2021/40)**

(54) **METHOD FOR IMPROVING RUBBER SPRAYING EFFICIENCY FOR SELF-HEALING TIRE**

VERFAHREN ZUR VERBESSERUNG DER GUMMISPRÜHEFFIZIENZ FÜR SELBSTHEILENDE REIFEN

PROCÉDÉ D'AMÉLIORATION DE L'EFFICACITÉ DE PULVÉRISATION DE CAOUTCHOUC POUR PNEU AUTO-CICATRISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **31.03.2020   CN 202010241612**

(43) Date of publication of application:
**15.06.2022   Bulletin 2022/24**

(73) Proprietor: **Shandong Linglong Tyre Co., Ltd.**
**Shandong 265400 (CN)**

(72) Inventors:
• **WANG, Feng**
  **Zhaoyuan, Shandong 265400 (CN)**
• **YANG, Caixin**
  **Zhaoyuan, Shandong 265400 (CN)**
• **YANG, Dejian**
  **Zhaoyuan, Shandong 265400 (CN)**
• **LU, Yanhong**
  **Zhaoyuan, Shandong 265400 (CN)**
• **TENG, Lei**
  **Zhaoyuan, Shandong 265400 (CN)**
• **ZHU, Liyan**
  **Zhaoyuan, Shandong 265400 (CN)**
• **CHEN, Dong**
  **Zhaoyuan, Shandong 265400 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(56) References cited:
**EP-A1- 2 865 515          CN-A- 106 179 828**
**CN-A- 109 094 071          CN-A- 111 531 932**
**CN-U- 207 709 302          DD-A1- 221 927**
**KR-A- 20190 044 318**

**Description**

TECHNICAL FIELD

The present disclosure relates to a process for adjusting a spraying amount, and in particular to a method for improving a cement spraying efficiency for a self-repairing tire.

BACKGROUND

The tires inevitably wear out after a period of use and thus a cement is typically used to repair the tires.

For the existing spraying device, the spraying amount depends on the size and specifications of the tires. After each manual spraying, the operator needs to measure the spraying thickness and then adjusts the spraying amount for the next spraying according to the spraying thickness, until the inner spraying thickness of the tire reaches $5 \pm 0.5$ mm. In summary, it is necessary to repeatedly adjust the spraying amount according to the spraying thickness during the spraying operation.

Patent document KR 2019 0044318 A discloses a sealant application method wherein a sensor system and a controller vary the position of the applicator nozzle based on sensed tyre surface information, in order to vary the application amount.

SUMMARY

**Technical Problem**

At present, before production, the spraying amount for each self-repairing tire is estimated prior to actual spraying, and the spraying is performed based on the spraying thickness and tire weight. The repeated operation to determine the spraying amount increases labor intensity and is not conducive to large-scale production.

**Solution to the Problem**

In order to overcome the above-mentioned shortcomings in the prior art, the present disclosure provides a method for improving a cement spraying efficiency for a self-repairing tire.

To solve the above technical problem, the present disclosure adopts the following technical solution.

A method for improving a cement spraying efficiency for a self-repairing tire includes the following steps:

step 1: inputting tire parameters into a control system, including rim diameter, section width, aspect ratio, cement thickness and cement density;
step 2: calculating a cement spraying amount for a tire based on the tire parameters of the tire to be repaired in the control system;
step 3: setting a crown cement parameter, setting a crown cement thickness in the control system, calculating an average cement thickness based on the cement spraying amount calculated by the control system in step 2, and adding 0.1-5 mm to the average cement thickness to serve as the crown cement thickness;
step 4: connecting the control system to a spraying device, and inputting the average cement thickness and the crown cement thickness acquired by the control system into the spraying device;
step 5: filling a cement storage tank of the spraying device with a sufficient amount of cement;
step 6: mounting the tire to be repaired in the spraying device, and moving the tire to be repaired to a repair station;
step 7: starting the spraying device; and evenly spraying, by a spray gun of the spraying device, the cement in the cement storage tank on a tire surface, and spraying a circle of cement with a thickness of 0.1-5 mm higher than the average cement thickness at a crown; and
step 8: drying and heating the sprayed tire to speed up solidification of the cement, and unloading the tire after the cement is solidified.

**Beneficial Effects of the Disclosure**

Compared with the prior art, the present disclosure has the following advantages:
In the present disclosure, the control system automatically calculates the cement spraying amount required for repair based on the tire parameters such as section width, aspect ratio and rim diameter, and realizes mass production of self-repairing tires according to the characteristics of the tires. The present disclosure is applicable to all tires of different specifications, and can realize a one-time spraying operation, thereby improving the spraying efficiency for self-repairing tires. The present disclosure avoids repeated operations to adjust the spraying amount for tire repair in the prior art, thereby solving the problems of low production efficiency, low automation level and poor quality control of self-repairing tires, and facilitating the large-scale production of self-repairing tires.

BRIEF DESCRIPTION OF THE DRAWINGS

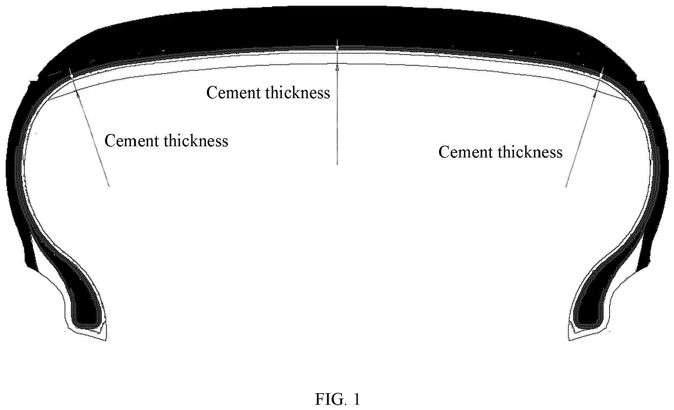

FIG. 1 shows spraying positions at a crown of a tire.

DETAILED DESCRIPTION OF THE EMBODIMENT

**Implementations of the Disclosure**

In order to facilitate the understanding of the present disclosure, the present disclosure is described more completely below with reference to the accompanying drawings. The drawings show preferred embodiments of the disclosure. However, the present disclosure may be embodied in various forms without being limited to the embodiments described herein. These embodiments are provided for a more thorough and comprehensive understanding of the present disclosure.

In addition, it should be noted that when a component is "fixed" or "provided" on the other component, the component may be fixed on the other component directly or via an intermediate component. When a component is connected with the other component, the component may be connected with the other component directly or via an intermediate component. The terms "vertical", "horizontal", "left", and "right" and similar expressions used herein are just for illustrative purposes, and do not mean sole implementations.

Referring to FIG. 1, an embodiment of the present disclosure provides a method for improving a cement spraying efficiency for a self-repairing tire, including the following steps:

Step 1: tire parameters are input into a control system, including rim diameter, section width, aspect ratio, cement thickness and cement density.

Step 2: Calculate a cement spraying amount for a tire based on the tire parameters of the tire to be repaired in the control system.

Step 3: A crown cement parameter and a crown cement thickness are set in the control system; an average cement thickness is calculated based on the cement spraying amount calculated by the control system in step 2, and 0.1-5 mm is added to the average cement thickness to serve as the crown cement thickness, so as to prevent the crown from leaking after a puncture.

Step 4: The control system is connected to a spraying device, and the average cement thickness and the crown cement thickness acquired by the control system are input into the spraying device.

Step 5: A cement storage tank of the spraying device is filled with a sufficient amount of cement.

Step 6: The tire to be repaired is mounted in the spraying device, and the tire is moved to be repaired to a repair station.

Step 7: The spraying device is started; and a spray gun of the spraying device evenly sprays the cement in the cement storage tank on a tire surface, and sprays a circle of cement with a thickness of 0.1-5 mm higher than the average cement thickness at a crown.

Step 8: The sprayed tire is dried and heated to speed up solidification of the cement, and the tire after the cement is solidified is unloaded to complete self-repair.

In an embodiment of the present disclosure, the spraying device is provided with a control panel digitally connected to a host of the spraying device; the control panel is a touch screen; and the control panel is signal-connected to the control system.

The control system calculates and writes the cement spraying amount for the tire into the control panel, and sends an instruction through the control panel to unload the tire or move the tire to the repair station.

In another embodiment of the present disclosure, the spraying device is provided with a fixture for fixing the tire; the fixture is used to clamp a rotation center of the tire; and the fixture is provided with a cylinder for adjusting a tire station.

The cylinder drives the fixture to move the tire to be repaired to a designated position, including the repair station and a mounting station.

In another embodiment of the present disclosure, a roll motor is provided on the fixture; the roll motor is signal-connected to the control panel; and an output end of the roll motor is connected to the fixture and is located on the same straight line with the rotation center of the tire.

The roll motor drives the tire to rotate, so as to realize circumferential spraying of the tire surface.

In another embodiment of the present disclosure, in step 2, the control system calculates the cement spraying amount for the tire to be repaired as follows:

$$\text{spraying amount} = [\text{rim diameter}/2*25.4+\text{section width/aspect ratio}*100]*6.28*\text{section width}*\text{cement thickness}*\text{cement density}.$$

In another embodiment of the present disclosure, the spraying device is provided with a pump connected to the cement storage tank; the pump is connected to the spray gun used in step 7; the spray gun is provided with an atomizing nozzle for atomizing the cement into particles; and the pump is signal-connected to the control panel.

When the spraying work is started on the control panel, the control panel sends a spraying signal to the pump, and the pump sprays the cement in the cement storage tank from the spray gun and the atomizing nozzle.

In another embodiment of the present disclosure, the control panel is provided with an automatic spraying module and a manual spraying module, which are signal-connected to the roll motor.

When automatic spraying is started, the roll motor automatically drives the tire to be repaired to rotate, so as to realize automatic circumferential spraying. After manual spraying is started, the roll motor is manually controlled to work, which is convenient for multiple spraying at positions with serious lack of cement on the tire.

It should be emphasized here that the present disclosure solves the problems existing in the prior art. At present, during tire repair, the spraying amount varies with the size of the tires. During manual spraying, it is necessary to measure the spraying thickness after first spraying and adjust the spraying amount accordingly for second spraying until the inner spraying thickness of the tire reaches 5 ± 0.5 mm. The present operation is cumbersome, laborious, inefficient, and is not conducive to large-scale production.

**Industrial Applicability**

The above described are the preferred embodiments of the present disclosure, which should not be construed as a limitation to the claims. The present disclosure is only limited to the scope of the independent claims.

Unless otherwise defined, all technical and scientific terms used herein have the same meaning as commonly understood by those skilled in the technical field of the present disclosure. The term "and/or" used herein includes any and all combinations of one or more of the associated listed items.

**Claims**

1. A method for improving a cement spraying efficiency for a self-repairing tire, **characterized in** comprising the following steps:

   step 1: inputting tire parameters into a control system, wherein the tire parameters comprise a rim diameter, a section width, an aspect ratio, a cement thickness and a cement density;
   step 2: calculating a cement spraying amount for a tire based on the tire parameters of the tire to be repaired in the control system;
   step 3: setting a crown cement parameter, setting a crown cement thickness in the control system, calculating an average cement thickness based on the cement spraying amount calculated by the control system in step 2, and adding 0.1-5 mm to the average cement thickness to serve as the crown cement thickness;
   step 4: connecting the control system to a spraying device, and inputting the average cement thickness and the crown cement thickness acquired by the control system into the spraying device;
   step 5: filling a cement storage tank of the spraying device with a sufficient amount of cement;
   step 6: mounting the tire to be repaired in the spraying device, and moving the tire to be repaired to a repair station;
   step 7: starting the spraying device; and allowing a spray gun of the spraying device to evenly spray the cement in the cement storage tank on a tire surface, and spraying a circle of cement with a thickness of 0.1-5 mm higher than the average cement thickness at a crown; and
   step 8: drying and heating the sprayed tire to speed up solidification of the cement, and unloading the tire after the cement is solidified.

2. The method according to claim 1, **characterized in that** the spraying device is provided with a control panel digitally connected to a host of the spraying device; the control panel is signal-connected to the control system; and the control system calculates the cement spraying amount for the tire and writes the cement spraying amount into the control panel.

3. The method according to claim 2, **characterized in that** the spraying device is provided with a fixture for fixing the tire; the fixture clamps a rotation center of the tire; and the fixture is provided with a cylinder for adjusting the repair station.

4. The method according to claim 3, **characterized in that** a roll motor is provided on the fixture; the roll motor is signal-connected to the control panel; and an output end of the roll motor is connected to the fixture and is located on the same straight line with the rotation center of the tire.

5. The method according to claim 1, **characterized in that** in step 2, the control system calculates the cement spraying amount for the tire to be repaired by the following equation:

$$\text{spraying amount} = [\text{rim diameter}/2*25.4+\text{section width}/\text{aspect ratio}*100]*6.28*\text{section width}*\text{cement thickness}*\text{cement density}.$$

6. The method according to claim 2, **characterized in that** the spraying device is provided with a pump connected to the cement storage tank; the pump is connected to the spray gun used in step 7; the spray gun is provided with an atomizing nozzle for atomizing the cement into particles; and the pump is signal-connected to the control panel.

7. The method according to claim 4, **characterized in that** the control panel is provided with an automatic spraying module and a manual spraying module, and the automatic spraying module and the manual spraying module are both signal-connected to the roll motor.


**Patentansprüche**

1. Verfahren zum Verbessern einer Bindesubstanzsprüheffizienz für einen selbstreparierenden Reifen, folgende Schritte umfassend:

Schritt 1: Eingeben von Reifenparametern in ein Steuersystem, wobei die Reifenparameter einen Felgendurchmesser, eine Reifenbreite, ein Seitenverhältnis, eine Bindesubstanzdicke und eine Bindesubstanzdichte umfassen;
Schritt 2: Berechnen einer Bindesubstanzsprühmenge für einen Reifen auf Grundlage der Reifenparameter des zu reparierenden Reifens in das Steuersystem;
Schritt 3: Einstellen eines Bindesubstanzkronenparameters, Einstellen einer Bindesubstanzkronendicke in dem Steuersystem, Berechnen einer durchschnittlichen Bindesubstanzdicke auf Grundlage der Bindesubstanzsprühmenge, die durch das Steuersystem in Schritt 2 berechnet wurde, und Hinzufügen von 0,1-5 mm zu der durchschnittlichen Bindesubstanzdicke als die Bindesubstanzkronendicke;
Schritt 4: Verbinden des Steuersystems mit einer Sprühvorrichtung und Eingeben einer durchschnittlichen Bindesubstanzdicke und der Bindesubstanzkronendicke, die durch das Steuersystem erfasst wurde, in die Sprühvorrichtung;
Schritt 5: Füllen eines Bindesubstanzspeichertanks der Sprühvorrichtung mit einer ausreichenden Menge an Bindesubstanz;
Schritt 6: Montieren des zu reparierenden Reifens in der Sprühvorrichtung und Bewegen des zu reparierenden Reifens an eine Reparaturstation;
Schritt 7: Starten der Sprühvorrichtung; und Zulassen, dass eine Sprühpistole der Sprühvorrichtung die Bindesubstanz im Bindesubstanzspeichertank gleichmäßig auf eine Reifenoberfläche sprüht, und Sprühen eines Kreises der Bindesubstanz mit einer Dicke von 0,1-5 mm über der durchschnittlichen Bindesubstanzdicke an einer Krone; und
Schritt 8: Trocknen und Erwärmen des gesprühten Reifens, um die Verfestigung der Bindesubstanz zu beschleunigen, und Abnehmen des Reifens, wenn sich die Bindesubstanz verfestigt hat.

2. Verfahren nach Anspruch 1, **dadurch gekennzeichnet, dass** die Sprühvorrichtung mit einem Bedienfeld versehen ist, das digital mit einem Host der Sprühvorrichtung verbunden ist; wobei das Bedienfeld mit dem Steuersystem in Signalverbindung steht; und das Steuersystem die Bindesubstanzsprühmenge für den Reifen berechnet und die Bindesubstanzsprühmenge in das Bedienfeld schreibt.

3. Verfahren nach Anspruch 2, **dadurch gekennzeichnet, dass** die Sprühvorrichtung mit einer Halterung zum Fixieren des Reifens versehen ist; wobei die Halterung ein Drehzentrum des Reifens einklemmt; und die Halterung mit einem Zylinder zum Einstellen der Reparaturstation versehen ist.

4. Verfahren nach Anspruch 3, **dadurch gekennzeichnet, dass** ein Rollmotor an der Halterung bereitgestellt ist; wobei der Rollmotor mit dem Bedienfeld in Signalverbindung steht; und ein Ausgangsende des Rollmotors mit der Halterung verbunden ist und auf derselben Geraden wie das Drehzentrum des Reifens liegt.

5. Verfahren nach Anspruch 1, **dadurch gekennzeichnet, dass** in Schritt 2 das Steuersystem die Bindesubstanzsprühmenge für den zu reparierenden Reifen gemäß der folgenden Gleichung berechnet:

$$\text{Sprühmenge} = [\text{Felgendurchmesser}/2*25{,}4+\text{Reifenbreite}/\text{Seitenverhältnis}*100]*6{,}28*\text{Reifenbreite}*\text{Bindesubstanzdicke}*\text{Bindesubstanzdichte}.$$

6. Verfahren nach Anspruch 2, **dadurch gekennzeichnet, dass** die Sprühvorrichtung is mit einer Pumpe versehen ist, die mit dem Bindesubstanzspeichertank verbunden ist; wobei die Pumpe mit der in Schritt 7 verwendeten Sprühpistole verbunden ist; die Sprühpistole mit einer Zerstäubungsdüse zum Zerstäuben der Bindesubstanz in Teilchen versehen ist; und die Pumpe mit dem Bedienfeld in Signalverbindung steht.

7. Verfahren nach Anspruch 4, **dadurch gekennzeichnet, dass** das Bedienfeld mit einem automatischen Sprühmodul und einem manuellen Sprühmodul versehen ist und das automatische Sprühmodul und das manuelle Sprühmodul beide mit dem Rollmotor in Signalverbindung stehen.

**Revendications**

1. Un procédé d'amélioration de l'efficacité de pulvérisation de ciment pour un pneu auto-réparateur, **caractérisé en ce qu'**il comprend les étapes suivantes :

   étape 1 : saisir les paramètres du pneu dans un système de commande, dans laquelle les paramètres du pneu comprennent le diamètre de jante, la largeur de section, un rapport hauteur/largeur, une épaisseur de ciment et une densité de ciment ;
   étape 2 : calculer la quantité de ciment à pulvériser pour un pneu en se basant sur les paramètres du pneu à réparer dans le système de commande ;
   étape 3 : définir un paramètre de ciment de couronne, définir une épaisseur de ciment de couronne dans le système de commande, calculer une épaisseur moyenne de ciment en se basant sur la quantité de ciment à pulvériser calculée par le système de commande à l'étape 2, et ajouter 0,1-5 mm à l'épaisseur moyenne de ciment en tant qu'épaisseur de ciment de couronne ;
   étape 4 : raccorder le système de commande à un dispositif de pulvérisation, et introduire l'épaisseur moyenne de ciment et l'épaisseur de ciment de couronne acquises par le système de commande dans le dispositif de pulvérisation ;
   étape 5 : remplir un réservoir de stockage de ciment du dispositif de pulvérisation de la quantité de ciment suffisante ;
   étape 6 : monter le pneu à réparer dans le dispositif de pulvérisation, et déplacer le pneu à réparer sur une station de réparation ;
   étape 7 : mettre le dispositif de pulvérisation en marche ; et laisser le pistolet de pulvérisation du dispositif de pulvérisation pulvériser de façon homogène le ciment dans le réservoir de stockage de ciment sur une surface de pneu, et pulvériser un cercle de ciment d'une épaisseur de 0,1-5 mm supérieure à l'épaisseur moyenne de ciment à la couronne ; et
   étape 8 : sécher et chauffer le pneu pulvérisé afin d'accélérer la solidification du ciment, et retirer le pneu une fois que le ciment est solidifié.

2. Un procédé selon la revendication 1, **caractérisé en ce que** le dispositif de pulvérisation est muni d'un panneau de commande raccordé numériquement à un hôte du dispositif de pulvérisation ; le système de commande est raccordé par signal au système de commande ; et le système de commande calcule la quantité de ciment à pulvériser pour le pneu et écrit la quantité de ciment à pulvériser sur le panneau de commande.

3. Un procédé selon la revendication 2, **caractérisé en ce que** le dispositif de pulvérisation est muni d'une fixation pour fixer le pneu ; la fixation serre le centre de rotation du pneu ; et la fixation est munie d'un cylindre pour ajuster la station de réparation.

4. Un procédé selon la revendication 3, **caractérisé en ce qu'**un moteur de rouleau est agencé sur la fixation ; le moteur de rouleau est raccordé par signal au panneau de commande ; et une terminaison de sortie du moteur de rouleau est raccordée à la fixation et est située sur la même ligne droite que le centre de rotation du pneu.

5. Un procédé selon la revendication 1, **caractérisé en ce qu'**à l'étape 2, le système de commande calcule la quantité de ciment à pulvériser pour le pneu à réparer à l'aide de l'équation suivante :

$$\text{quantité à pulvériser} = [\text{diamètre de jante}/2 * 25{,}4 + \text{largeur de section/rapport hauteur/largeur} * 100] * 6{,}28 * \text{largeur de section} * \text{épaisseur de ciment} * \text{densité de ciment}.$$

6. Un procédé selon la revendication 2, **caractérisé en ce que** le dispositif de pulvérisation est muni d'une pompe raccordée au réservoir de stockage de ciment ; la pompe est raccordée au pistolet de pulvérisation utilisé à l'étape 7 ; le pistolet de pulvérisation est muni d'une buse d'atomisation pour atomiser le ciment en particules ; et la pompe est raccordée par signal au panneau de commande.

7. Un procédé selon la revendication 4, **caractérisé en ce que** le panneau de commande est muni d'un module de pulvérisation automatique et d'un module de pulvérisation manuelle, et le module de pulvérisation automatique et le module de pulvérisation manuelle sont tous deux raccordés par signal au moteur de rouleau.

FIG. 1

**EP 4 011 605 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20190044318 A